# EUROPÄISCHE PATENTANMELDUNG

(11) **EP 2 908 410 A1**
(43) Veröffentlichungstag der Anmeldung: **19.08.2015**
(21) Anmeldenummer: 14154910.5
(22) Anmeldetag: 12.02.2014
(51) Int. Cl.: H02K 5/26, H02K 15/14, H02K 5/22

(54) **Drehstrom-Motor insbesondere für einen stationären Einsatz**

(71) Anmelder: WEBER, Gisela, A-2474 Gattendorf (AT); Weber, Günter, A-2474 Gattendorf (AT)
(72) Erfinder: WEBER, Gisela, A-2474 Gattendorf (AT); Weber, Günter, A-2474 Gattendorf (AT)
(74) Vertreter: Bremer, Ulrich

(57) **Zusammenfassung**

Die Erfindung betrifft einen Drehstrom-Motor (1), insbesondere für stationäre Anwendungen, wobei der Drehstrom-Motor (1) mindestens aufweist:
ein Motorgehäuse (3), das auf seinem Außenumfang (3a) Kühlrippen (11) aufweist,
einen in dem Motorgehäuse (3) aufgenommenen Stator (4),
einen in dem Stator (4) drehbar aufgenommenen Rotor (5) mit einer Motor-welle (21), und
einen Motorfuß (7) zur Befestigung oder Auflage auf einem Untergrund.
Hierbei ist vorgesehen, dass
das Motorgehäuse (3) mit den Kühlrippen (11) als Strangpressteil aus einer Aluminium-Legierung ausgebildet ist,
an dem Außenumfang (3a) des Motorgehäuses (3) Aufnahmerippen (12) ausgebildet sind, und
der Motorfuß (7) an den Aufnahmerippen (12) formschlüssig und/oder mit Klemmwirkung angebracht ist.

## Beschreibung

Die Erfindung betrifft einen Drehstrom-Motor, der insbesondere für einen stationären Einsatz vorgesehen ist, aber auch z. B. in mobilen Anlagen mit Drehstromversorgung einsetzbar ist. Der Drehstrom-Motor kann hierbei direkt an einen Drehstrom-Anschluss bzw. dreiphasigen Wechselstrom-Anschluss angeschlossen werden; weiterhin kann der Drehstrom-Motor auch zum Anschluss an Wechselstrom bzw. einphasigen Wechselstrom vorgesehen sein und hierzu eine entsprechende elektrische Leistungsschaltung, insbesondere mittels Kondensator und/oder Spule aufweisen, um intern den Drehstrom bereitzustellen.

Derartige Drehstrom-Motoren werden insbesondere für hydraulische Verstellsysteme eingesetzt; der Drehstrom-Motor treibt hierbei eine Hydraulikpumpe an, um ein hydraulisches Verstellsystem, wie z. B. eine hydraulische Hebebühne oder einen Scherenhub anzutreiben.

Ein derartiger Drehstrom-Motor ist im Allgemeinen symmetrisch zu seiner Axialrichtung ausgelegt, mit einem entsprechend im Wesentlichen zylindrischen Motorgehäuse, in dem ein Stator starr aufgenommen ist, der über einen elektrischen Anschlusskasten bestromt wird; ein Rotor ist drehbar im Stator gelagert, insbesondere als Kurzschlussläufer, und weist eine Motorwelle auf, die im Allgemeinen am vorderen und hinteren Ende in Lagerdeckeln gelagert ist.

Das Motorgehäuse wird hierbei im Allgemeinen als Druckgussteil aus Aluminium, oder auch aus Stahl gedreht, mit einer geeigneten Ausbildung einer Motofußaufnahme. Der Motorfuß wird nachfolgend von außen an das Motorgehäuse gesetzt und dient zur Anbringung auf einer Unterlage. Hierbei sind auch gegossene Ausbildungen bekannt, bei denen das Motorgehäuse zusammen mit dem Motorfuß gegossen wird, bei entsprechend komplexerer Formgebung.

Drehstrom-Motoren unterschiedlicher Leistungsklassen erfordern somit insbesondere geeignet dimensionierte Statoren und Rotoren, so dass auch das Motorgehäuse entsprechend größer ausgelegt wird.

Der Erfindung liegt die Aufgabe zugrunde, einen Drehstrom-Motor zu schaffen, der bei sicherer Funktionalität relativ kostengünstig ausbildbar ist.

Diese Aufgabe wird durch einen Drehstrom-Motor gemäß Anspruch 1 gelöst. Die Unteransprüche beschreiben bevorzugte Weiterbildungen. Hierbei ist weiterhin ein Herstellungsverfahren zur Herstellung des Drehstrom-Motors geschaffen. Weiterhin wird eine Hydraulikeinheit mit einem derartigen Drehstrom-Motor und einer Hydraulikpumpe geschaffen.

Erfindungsgemäß wird somit zumindest das Motorgehäuse, vorteilhafterweise auch der Motorfuß, als Strangpressteil ausgebildet. An dem Motorgehäuse sind hierbei bereits die Kühlrippen und vorteilhafterweise auch Aufnahmerippen ausgebildet, wobei die Aufnahmerippen zur Aufnahme des Motorfußes geeignet sind.

Der Erfindung liegt hierbei der Gedanke zugrunde, dass die Kühlrippen und das vorteilhafterweise im Wesentlichen zylindrische Motorgehäuse grundsätzlich als Strangpressteil, d. h. in einer Stangpressrichtung entsprechend der Axialrichtung, ausbildbar sind; der Verschluss an den axialen Enden kann durch einen oder zwei Lagerdeckel erfolgen. Hierbei kann die Anbringung des Motorfußes an Aufnahmerippen erfolgen, die - wie die Kühlrippen - am Außenumfang des Motorgehäuses ausgebildet sind. Die Aufnahmerippen können somit z. B. jeweils zwischen zwei Kühlrippen angeordnet sein. Die Aufnahme des Motorfußes kann durch geeignete Formgebung, insbesondere durch Nut-Zapfen-Eingriff erfolgen. Vorteilhafterweise sind hierzu die Aufnahmerippen abgewinkelt oder abgebogen, z. B. gegenläufig bzw. auseinandergehend abgewickelt, so dass sie in Rippenaufnahmen des Motorfußes aufgenommen werden können, die z. B. jeweils eine Nut aufweisen.

Erfindungsgemäß kann insbesondere auch der Motorfuß als Strangpressteil ausgebildet werden. Dem liegt die Erkenntnis zugrunde, dass die Rippenaufnahme durch eine sich in Axialrichtung erstreckende Nut ausbildbar ist, so dass der gesamte Motorfuß als Strangpressteil ausbildbar ist, wobei der Motorfuß dann bei der Montage nachfolgend im Wesentlichen in Axialrichtung auf die Aufnahmerippen aufgeschoben wird. Durch diese Aufnahme kann bereits ein Formschluss zur Sicherung in vertikaler Richtung bzw. radialer Richtung, also senkrecht zur Axialrichtung erfolgen; weiterhin kann vorteilhafterweise auch eine Klemmwirkung auftreten. Unabhängig von dem Formschluss und Klemmwirkung kann eine zusätzliche Sicherung gegen Herausrutschen in Axialerrichtung z. B. durch eine eingesteckte Schraube erfolgen, die durch den Motorfuß und in das Motorgehäuse gesetzt wird; eine derartige Schraube bzw. ein anderes Befestigungsmittel muss lediglich geringe Kräfte und kann daher entsprechend klein dimensioniert sein.

Bereits hierdurch werden einige Vorteile erreicht:
Die Herstellung des Motorgehäuses ist sehr kostengünstig. Indem ein erstes Strangpressprofil für das Motorgehäuse und ein zweites Strangpressprofil für den Motorfuß verwendet werden, die geeignet abgelängt werden, ist eine sehr kostengünstige Ausbildung des Motorgehäuses und des Motorfußes erreichbar; auch die Montage erfolgt schnell und einfach durch Aufstecken in axialer Richtung.

Weiterhin wird hierdurch ein erheblicher Vorteil erreicht, da Motorgehäuse - und entsprechende Motorfüße - zur Ausbildung von drehsicheren Motoren unterschiedlicher Motoren unterschiedlicher Leistungen ausbildbar sind, indem das Motorgehäuse entsprechend mit geeigneter erster Länge abgelängt wird und Stator und Rotor mit entsprechenden Leistungen mit entsprechender Länge eingesetzt werden.

Ein weiterer erheblicher Vorteil kann durch eine hohe Variabilität in der Anbringung des Motorfußes, insbesondere der Position des Motorfußes erreicht werden. So kann eine höhere Anzahl von Aufnahmerippen ausgebildet werden; insbesondere können mehrere Sätze von Aufnahmerippen vorgesehen werden, so dass der Motorfuß in unterschiedlichen Stellungen am Außenumfang anbringbar ist. So kann z. B. eine Seite des Motorgehäuses zur Aufnahme eines elektrischen Anschlusskastens vorgesehen sein, z. B. die Oberseite; an den drei weiteren Seiten - Unterseite und Seitenflächen - können Aufnahmerippen zur Anbringung des Motorfußes vorgesehen sein, die eine wahlweise Anbringung des Motorfußes ermöglichen.

Somit wird ein Einsatz des Motorfußes in unterschiedlichen Stellungen, insbesondere in unterschiedlicher Positionierung relativ zu dem elektrischen Anschlusskasten, ermöglicht.

Weiterhin kann vorgesehen sein, dass lediglich ein Lagerdeckel an dem Motorgehäuse angebracht wird; die Lagerung am anderen Ende, insbesondere die vordere Lagerung für den Abtrieb, kann in der angetriebenen Einheit, insbesondere einer Hydraulikpumpe erfolgen. Hierbei können geeignete Montageschrauben durch das Motorgehäuse gesetzt werden bzw. am Motorgehäuse aufgenommen sein, die am hinteren Ende den Lagerdeckel befestigen und am vorderen Ende die Anbringung des Motorgehäuses und somit der gesamten Hydraulikpumpe an der angetriebenen Einheit, insbesondere einer Hydraulikpumpe, ermöglichen.

Vorteilhafterweise ist das Motorgehäuse aus einer Aluminiumlegierung ausgebildet und der Drehstrommotor ohne Lüfterrad ausgebildet, d.h. insbesondere vollständig ohne eine aktive Kühleinrichtung. Hierdurch reduzieren sich die Baulänge und das Eigengewicht sowie die Herstellungskosten und der Energieverbrauch, der Geräuschpegel wird deutlich reduziert. Hierbei wird erfindungsgemäß erkannt, dass Aluminium ein guter Wärmeleiter ist und die einteilige Ausbildung des Motorgehäuses mit Kühlrippen und Aufnahmerippen sowie der aus Aluminium gebildete und direkt, vorzugsweise großflächig angebundene Motorfuß bereits eine gute Wärmeableitung ermöglichen, so dass die Gefahr einer Überhitzung vermieden werden kann.

Der Motorfuß ist vorzugsweise mit seiner Rippenaufnahme längsverschiebbar an oder in den Aufnahmerippen aufgenommen und kann z. B. lediglich durch ein Klemmmittel an dem Motorgehäuse befestigt werden. Hierdurch wird der Vorteil erreicht, dass jederzeit auch nachträglich eine Anpassung an die Platzierungsmöglichkeiten und den Bauraum gegeben ist; weiterhin ist eine Bohrung und somit Schwächung des Motorgehäuses nicht erforderlich.

Das erfindungsgemäße Verfahren ermöglicht somit eine schnelle und kostengünstige Herstellung mit wenigen Schritten. Die Verfahrensschritte des Strangpressens des ersten Strangpressprofils mit nachfolgendem, geeigneten Ablängen des Motorgehäuses in einer ersten Länge, sowie der Verfahrensschritt des Ablängens des Motorfußes aus dem zweiten Strangpressprofil können hierbei in ihrer Reihenfolge auch vertauscht sein. Weiterhin können die Schritte des Einsetzens des Stators und Rotors und der Schritt der Anbringung des Motorfußes an dem Motorgehäuse grundsätzlich vertauscht sein.

Insbesondere ist das Herstellungsverfahren schnell und kostengünstig, da die Montage des Motorfußes schnell und flexibel in einer geeigneten Position durch Aufschieben und ggf. Fixieren in Axialrichtung erfolgen kann.

Die Erfindung wird im Folgenden anhand der beiliegenden Zeichnungen an einigen Ausführungsformen erläutert. Es zeigen:
- Fig. 1: einen Drehstrom-Motor gemäß einer Ausführungsform in Aufsicht;
- Fig. 2: eine Explosionsdarstellung des Drehstrom-Motors aus Fig. 1;
- Fig. 3: stirnseitige und perspektivische Ansichten des Motorgehäuses und Motorfußes sowie der zu deren Ausbildung eingesetzten, abzulängenden Stangpressprofile;
- Fig. 4: eine Hydraulik-Versorgungseinheit mit dem Drehstrom-Motor aus Fig. 1 bis 3;
- Fig. 5: mehrere perspektivische Ansichten des Drehstrom-Motors bei unterschiedlicher Anbringung des Motorfußes;
- Fig. 6: einen Schnitt senkrecht zur Achse des unteren Bereichs des Drehstrom-Motors mit einer Fixierung des Motorgehäuses an dem Motorfuß.

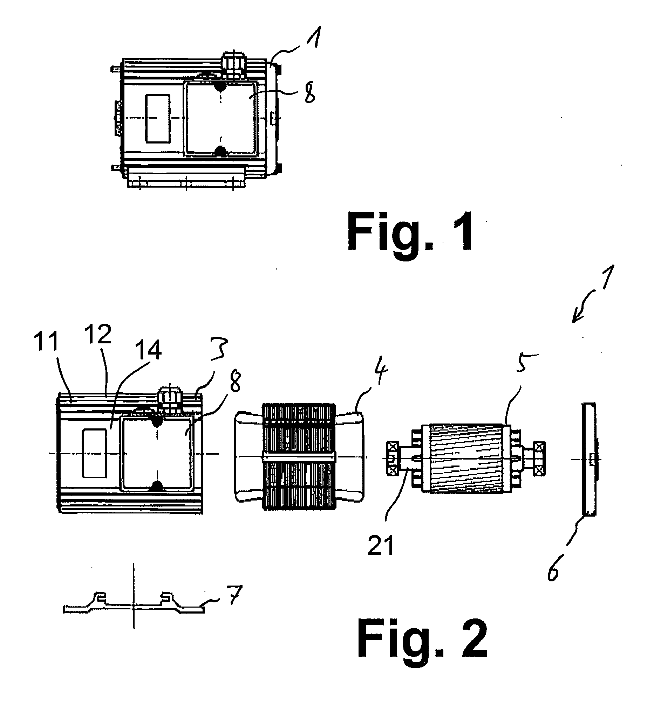

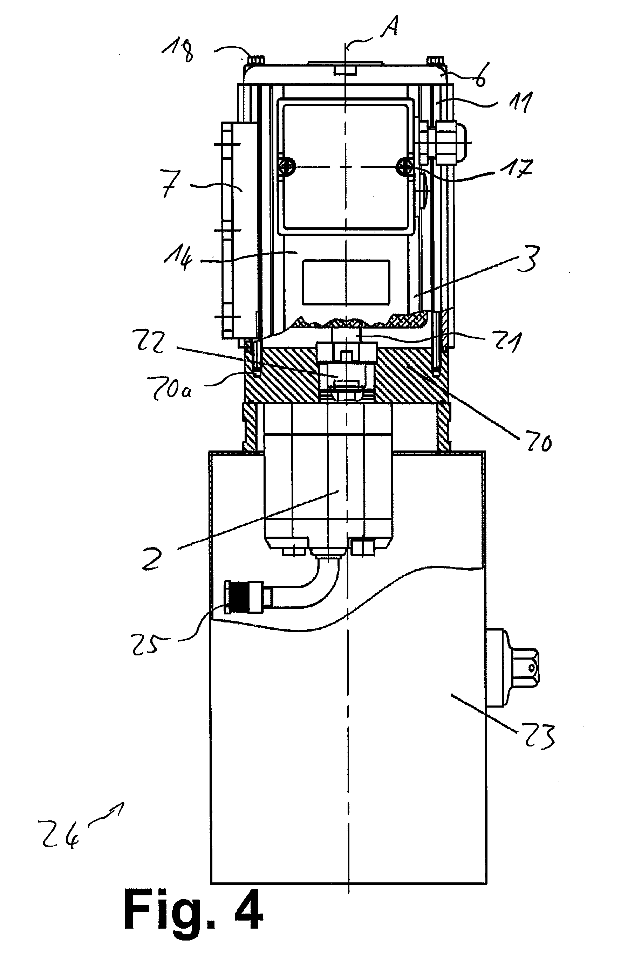

Ein Drehstrom-Motor 1 ist für einen stationären Einsatz, insbesondere zum Anschluss an eine in Fig. 4 gezeigte Hydraulikpumpe 2 vorgesehen. Der Drehstrom-Motor 1 weist gemäß insbesondere der Explosionsdarstellung der Fig. 2 ein Motorgehäuse 3, einen in den Innenraum 3b des Motorgehäuses 3 gesetzten Stator 4 und einen in dem Stator 4 drehbar aufgenommenen Rotor 5, weiterhin einen hinteren Lagerdeckel 6, sowie einen Motorfuß 7 auf.

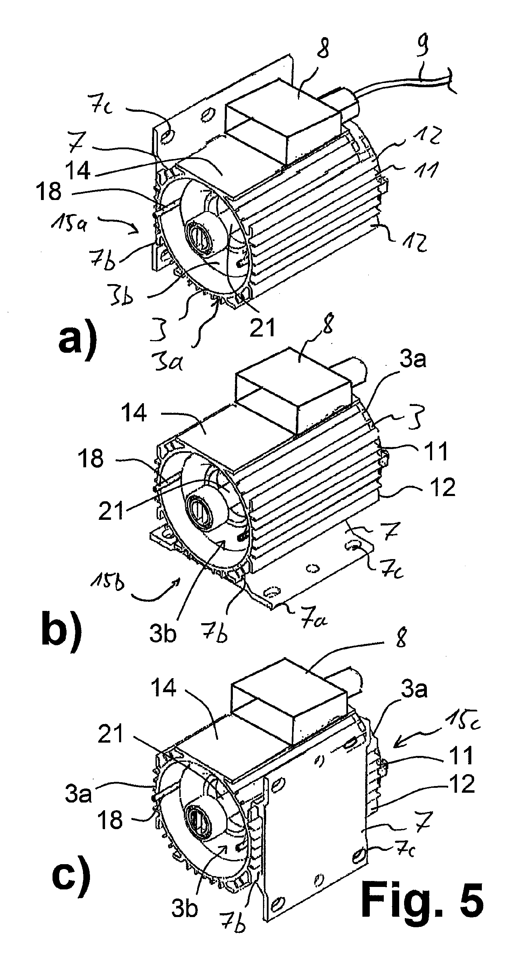

Weiterhin ist ein Anschlusskasten 8 zur Aufnahme eines in Fig. 5 angedeuteten Stromversorgungskabels 9 angebracht. Über das Stromkabel 9 kann insbesondere direkt Drehstrom, d. h. dreiphasiger Wechselstrom zugeführt werden; weiterhin kann der Drehstrom-Motor 1 auch zur Aufnahme von einphasigem Wechselstrom ausgebildet sein, so dass dann z. B. im Anschlusskasten 8 eine ergänzende elektrische Schaltung, insbesondere mit Kondensator und/oder Spule, zur Ausbildung eines Drehstroms aufgenommen sind.

Das Motorgehäuse 3 ist als Strangpressprofil aus Aluminium ausgebildet und weist auf seinem - im Wesentlichen zylindrischen - Außenumfang 3a Kühlrippen 11 und Aufnahmerippen 12 auf. Die Kühlrippen 11 stehen radial nach außen ab und vergrößern die effektive Oberfläche der zylindrischen Außenfläche 3a. Die Aufnahmerippen 12 dienen zur Aufnahme des Motorfußes 7, vorzugsweise gemäß der Ausführungsform der Fig. 5 in drei Stellungen, so dass sechs Aufnahmerippen 12 vorgesehen sind, um in den drei in Fig. 5 gezeigten Stellungen jeweils den Motorfuß 7 aufnehmen zu können. Das Motorgehäuse 3 mitsamt den Kühlrippen 11 und Aufnahmerippen 12 ist somit als Strangpressteil gefertigt, wobei die Strangpressrichtung in Axialrichtung A des auszubildenden Drehstrom-Motors 1 verläuft. Weiterhin einteilig ausgebildet mit dem Motorgehäuse 3 ist eine Montagefläche 14, auf der der Anschlusskasten 8 aufgesetzt, z. B. angeschraubt ist.

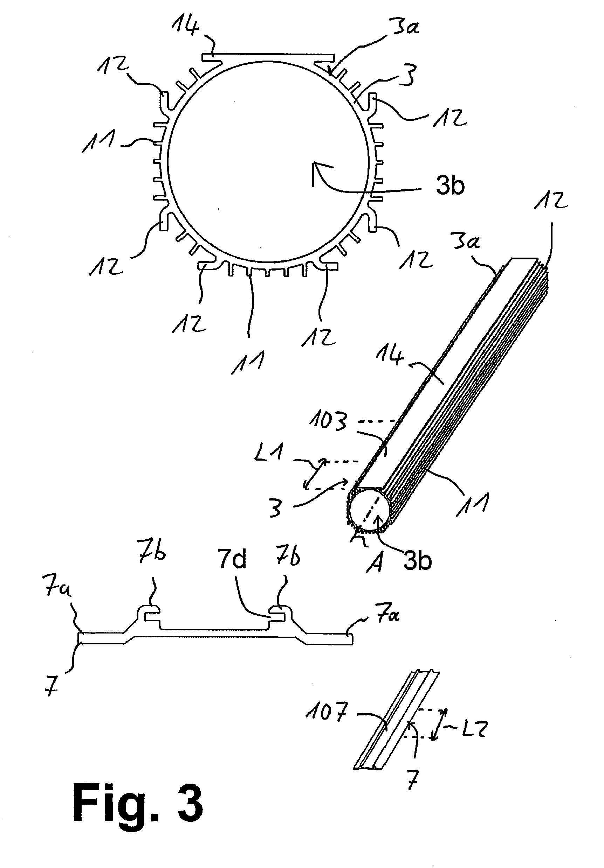

Der Motorfuß 7 ist detaillierter insbesondere in Fig. 3 gezeigt und ebenfalls als Strangpressteil aus Aluminium ausgebildet. Der Motorfuß 7 weist seitliche Auflagelaschen 7a (Auflagestege) und zwischen diesen zwei Rippenaufnahmen 7b auf, die passend ausgebildet sind mit jeweils einer Aufnahmenut 7d zur Aufnahme von zwei Aufnahmerippen 12 des Motorgehäuses 3. Somit kann der Motorfuß 7 in Längsrichtung bzw. Axialrichtung A mit den Rippenaufnahmen 7b auf zwei Aufnahmerippen 12 des Motorgehäuses 3 aufgezogen werden.

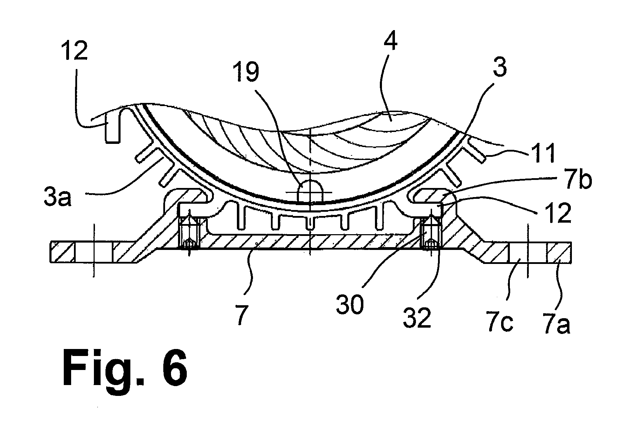

Diese Aufnahme des Motorfußes 7 an dem Motorgehäuse 3 erfolgt mit einem Formschluss und/oder einer Klemmwirkung zumindest senkrecht zur Axialrichtung A, die bereits lediglich noch eine Verschiebung in Axialrichtung A zulässt. Fig. 6 zeigt eine mögliche Befestigung und Sicherung des Motorfußes 7 in Axialrichtung A durch einen Gewindestift 30, der in eine Gewindebohrung 32 des Motorfußes 7 eingeschraubt ist und mit seiner Spitze 30a gegen die in der Aufnahmenut 7d aufgenommene Aufnahmerippe 12 drückt; somit wird die Aufnahmerippe 12 durch Klemmung gehalten; ein Gewindeschneiden im Motorgehäuse 3 ist - anders als bei Befestigungen des Motorfußes gemäß dem Stand der Technik - somit nicht erforderlich. Die Längsposition kann insbesondere frei einstellbar und/oder nachträglich variabel sein.

Das Motorgehäuse 3 weist auf seinem Außenumfang 3a drei (vorzugsweise um 90° versetzte) Anschlussseiten 15a, 15b und 15c auf, an denen jeweils ein Paar von Aufnahmerippen 12 ausgebildet ist, so dass der Motorfuß 7 in diesen drei Positionen angebracht werden kann, je nach den jeweiligen Montagebedingungen bzw. insbesondere auch der Positionierung des Anschlusskastens 8 relativ zum Motorfuß 7 und somit dem Untergrund, auf dem der Motorfuß 7 zu befestigen ist. Der Motorfuß 7 weist vorteilhafterweise an seinen Auflagelaschen 7a, Montagelöcher 7c zur Anbringung an einem Untergrund auf.

Wie insbesondere aus Fig. 3 erkennbar, kann das Motorgehäuse 3 aus einem ersten Strangpressprofil 103, das z. B. mit einer Länge von 8 m hergestellt wird, durch geeignetes Ablängen in einer ersten Länge L1 hergestellt werden. Das Motorgehäuse 3 kann hierbei für unterschiedliche Leistungen bzw. Leistungsstufen und somit zur Aufnahme unterschiedlich langer Statoren 4 und Rotoren 5 mit unterschiedlicher Länge dimensioniert werden, z. B. mit einer Länge von 155 mm für eine Leistung von 0,75 kW, und weiteren Längen von 180 mm, 215 mm und 260 mm für Leistungen von 1,1 KW, 1,5 kW und 2,2 kW.

Der Motorfuß 7 kann entsprechend aus einem zweiten Strangpressprofil 107 durch geeignetes Ablängen auf eine zweite Länge L2 hergestellt werden, jeweils wiederum mit geeigneter Länge zur Anbringung an einer entsprechenden Länge des Motorgehäuses 3, insbesondere mit L2 < L1. Die Montagelöcher 7c können dann in einem nachfolgenden Schritt jeweils z. B. ausbohrt werden.

Die Anbringung der weiteren Komponenten am Motorgehäuse 3 erfolgt z. B. mittels Schrauben 17, wie aus der Aufsicht der Fig. 4 bei der Anbringung des Anschlusskastens 8 ersichtlich. Der Rotor 5 ist drehbar im Stator 4 gelagert, wobei von hinten, d. h. in Fig. 5 von rechts und in Fig. 4 von oben, jeweils der hintere Lagerdeckel 6 auf das Motorgehäuse 3 aufgesetzt und durch sich in Axialrichtung erstreckende und in geeignete Bohrungen 19 des Motorgehäuses 3 eingesetzte Schrauben 18 befestigt wird. Die Schrauben 18 können sich vorteilhafterweise in Längsrichtung vollständig durch das Motorgehäuse 3 erstrecken und ragen somit - wie auch aus den perspektivischen Darstellungen der Fig. 5a) bis c) ersichtlich - nach vorne vor, so dass sie in Aufnahmebohrungen 20a eines Ventilblocks 20 der Hydraulikpumpe 2 aufgenommen sind. Eine Motorwelle 21 des Rotors 5 kann vorteilhafterweise in einer Kupplung 22 aufgenommen und somit an der Hydraulikpumpe 2 angeschlossen sein. Die Kupplung 22 ist vorteilhafterweise als Stahlwelle ausgebildet, die beidseitig geschlitzt ist, um die Motorwelle 21 formschlüssig mit der Hydraulikpumpe 2 zu verbinden. Gemäß Fig. 4 wird eine Hydraulikeinheit 24 gebildet aus dem Drehstrom-Motor 1, der Hydraulikpumpe 2 mitsamt Kupplung 22, vorteilhafterweise ergänzend ein Öltank 23 vorgesehen ist, so dass an einen Hydraulikanschluss 25 nachfolgend ein Hydrauliksystem angeschlossen werden kann, z. B. für eine hydraulische Scherenhubbühne und andere hydraulische Verstellsysteme. Bei dieser Ausbildung kann somit ein vorderer Lagerdeckel entfallen; die Motorwelle 21 ist am hinteren Ende - in Fig. 4 oben - in dem hinteren Lagerdeckel 6 gelagert, und am vorderen Ende an die Kupplung 22 angeschlossen, wobei sowohl die Kupplung 22 als auch das vordere Ende der Motorwelle 21 in dem Ventilblock 20 gelagert sein können.

Die in Fig. 4 gezeigte Hydraulikeinheit ist somit kleinbauend und kostengünstig, mit wenigen Bauteilen.

Somit wird insgesamt ein Modulsystem geschaffen, bei dem Drehstrom-Motoren 1 unterschiedlicher Leistungen ausbildbar sind durch geeignetes Ablängen des Motorgehäuses 3 aus dem ersten Strangpressprofil 103, weiterhin eines geeignet langen Motorfußes 7 aus dem zweiten Strangpressprofil 107, und Einsetzen jeweils der Leistungsstufe entsprechenden Statoren 4 und Rotoren 5, wobei ein einheitlicher Hinterradlagerdeckel 6 aufsetzbar ist. Auch weitere Komponenten wie der Anschlusskasten 8 und Schrauben 17 können einheitlich für Drehstrom-Motoren 1 unterschiedlicher Leistungen bzw. Leistungsklassen ausgebildet werden. Hierbei können z. B. an eine gegebene Hydraulikpumpe 2 mit Ventilblock 20 und Kupplung 22 diese Drehstrom-Motoren 1 unterschiedlicher Leistungen jeweils angeschlossen werden.

## Patentansprüche

1. Drehstrom-Motor (1), insbesondere für stationäre Anwendungen, wobei der Drehstrom-Motor (1) mindestens aufweist:
ein Motorgehäuse (3), das auf seinem Außenumfang (3a) Kühlrippen (11) aufweist,
einen in dem Motorgehäuse (3) aufgenommenen Stator (4),
einen in dem Stator (4) drehbar aufgenommenen Rotor (5) mit einer Motorwelle (21), und
einen Motorfuß (7) zur Befestigung oder Auflage auf einem Untergrund,
**dadurch gekennzeichnet, dass**
das Motorgehäuse (3) mit den Kühlrippen (11) als Strangpressteil aus einer Aluminium-Legierung ausgebildet ist,
an dem Außenumfang (3a) des Motorgehäuses (3) Aufnahmerippen (12) ausgebildet sind, und
der Motorfuß (7) an den Aufnahmerippen (12) formschlüssig und/oder mit Klemmwirkung angebracht ist.

2. Drehstrom-Motor (1) nach Anspruch 1, **dadurch gekennzeichnet, dass** auch der Motorfuß (7) als Strangpressteil, vorzugsweise aus einer Aluminium-Legierung, ausgebildet ist.

3. Drehstrom-Motor (1) nach Anspruch 1 oder 2, **dadurch gekennzeichnet, dass** der Motorfuß (7) im Wesentlichen in Axialrichtung (A) des Drehstrom-Motors (1) auf die Aufnahmerippen (12) aufgeschoben ist, insbesondere mit einstellbarer Längsposition.

4. Drehstrom-Motor (1) nach einem der vorherigen Ansprüche, **dadurch gekennzeichnet, dass** der Motorfuß (7) zwei Rippenaufnahmen (7b) aufweist, mit denen er auf zwei Aufnahmerippen (12) des Motorgehäuses (3) aufschiebbar ist, unter Ausbildung eines Formschlusses und/oder einer Klemmwirkung, wobei die Rippenaufnahmen (7b) jeweils eine Aufnahmenut (7d) aufweisen zur Aufnahme jeweils einer Aufnahmerippe (12).

5. Drehstrom-Motor (1) nach einem der vorherigen Ansprüche, **dadurch gekennzeichnet, dass** der Motorfuß (7) in mindestens zwei, vorzugsweise drei Montagestellungen (15a, 15b, 15c) oder Montagepositionen am Außenumfang (3a) des Motorgehäuses (3) anbringbar ist, wobei mehrere, z. B. sechs, Aufnahmerippen (12) an dem Außenumfang (3a) des Motorgehäuses (3) verteilt vorgesehen sind zur Ausbildung der Montagestellungen (15a, 15b, 15c).

6. Drehstrom-Motor (1) nach einem der vorherigen Ansprüche, **dadurch gekennzeichnet, dass** die Aufnahmerippen (12) in Umfangsrichtung zwischen jeweils zwei Kühlrippen (11) ausgebildet sind, wobei sich die Kühlrippen (11) und die Aufnahmerippen (12) mit gleichmäßiger Formgebung in Axialrichtung (A) erstrecken, zur Ausbildung als Strangpressteil.

7. Drehstrom-Motor (1) nach einem der vorherigen Ansprüche, **dadurch gekennzeichnet, dass** die Aufnahmerippen (12) sich jeweils radial von dem Motorgehäuse (3a) nach außen erstrecken und abgewinkelt oder umgelegt sind zur Aufnahme des Motorfußes (7).

8. Drehstrom-Motor (1) nach einem der vorherigen Ansprüche, **dadurch gekennzeichnet, dass** das Motorgehäuse (3) und der Motorfuß (7) mit gleichmäßigem Querschnitt ausgebildet sind zur Herstellung durch Ablängen aus einem ersten und zweiten Strangpressprofil (103, 107).

9. Drehstrom-Motor (1) nach einem der vorherigen Ansprüche, **dadurch gekennzeichnet, dass** er weiterhin einen hinteren Lagerdeckel (6) zur Lagerung der Motorwelle (21) des Rotors (5) aufweist, wobei der hintere Lagerdeckel (6) an dem Motorgehäuse (3) befestigt ist durch in Axialrichtung (A) durch das Motorgehäuse (3) gesetzte Schrauben (18) zum Einsetzen in einen am vorderen Ende angeordneten, von dem Drehstrom-Motor (1) antreibbaren Verbraucher (2).

10. Drehstrom-Motor (1) nach einem der vorherigen Ansprüche, **dadurch gekennzeichnet, dass** das Motorgehäuse (3) eine Montagefläche (14) zur Aufnahme eines elektrischen Anschlusskastens (8) für ein Stromkabel (9) und/oder einen elektrischen Deckel (10) aufweist.

11. Drehstrom-Motor (1) nach einem der vorherigen Ansprüche, **dadurch gekennzeichnet, dass** er ohne eine aktive Kühleinrichtung ausgebildet ist.

12. Hydraulikeinheit (24), die einen Drehstrom-Motor (1) nach einem der vorherigen Ansprüche und eine Hydraulikpumpe (2) aufweist, die von der Motorwelle (21) des Rotors (5) des Drehstrom-Motors (1) antreibbar ist,
wobei die Motorwelle (21) an ihrem vorderen Ende ausschließlich in der Hydraulikpumpe (2) oder einem an der Hydraulikpumpe (2) vorgesehenen Ventilblock (20) gelagert ist und das Motorgehäuse (3) mit der Hydraulikpumpe (2) oder dem Ventilblock (20) starr gekoppelt ist, z. B. durch die zur Anbringung des hinteren Lagerdeckels (6) eingesetzten Schrauben (18).

13. Verfahren zum Herstellen eines Drehstrom-Motors (1), mit mindestens folgenden Schritten:
Strangpressen eines ersten Strangpressprofils (103) aus einem Metall, vorteilhafterweise einer Aluminium-Legierung,
wobei das erste Strangpressteil (103) einen Außenumfang (3a) mit nach außen abstehenden Kühlrippen (11), Aufnahmerippen (12) und einen Innenraum (3b) aufweist,
Strangpressen eines zweiten Strangpressprofils (107) aus einem Metall, vorzugsweise einer Aluminium-Legierung,
wobei das zweite Strangpressprofil (107) Auflagelaschen (7a) zur Auflage auf einem Untergrund und Rippenaufnahmen (7b) zur Aufnahme der Aufnahmerippen (12) aufweist,
Ablängen eines Motorgehäuses (3) aus dem ersten Strangpressprofil (103) mit einer ersten Länge (L1) in der Axialrichtung (A), Ablängen eines Motorfußes (7) aus dem zweiten Strangpressprofil (107) mit einer zweiten Länge (L2),
Einsetzen eines Stators (4) in das Motorgehäuse (3) und Einsetzen eines Rotors (5) in den Stator (4),
Anbringen des Motorfußes (7) an dem Motorgehäuse (3) unter Ausbildung eines Formschlusses und/oder einer Klemmwirkung.

14. Verfahren nach Anspruch 13, **dadurch gekennzeichnet, dass** der Motorfuß (7) im Wesentlichen in Axialrichtung (A) mit seinem Rippenaufnahmen (7b) auf die Aufnahmerippen (12) des Motorgehäuses (3) aufgeschoben wird, unter Ausbildung eines Formschlusses und/oder einer Klemmwirkung zumindest senkrecht zur Axialrichtung (A).

15. Verfahren nach Anspruch 13 oder 14, **dadurch gekennzeichnet, dass** ein hinterer Lagerdeckel (6) zur Lagerung einer Motorwelle (21) des Rotors (5) an dem Motorgehäuse (3) befestigt wird, vorzugsweise mittels in das Motorgehäuse (3) eingesetzter Schrauben (18).
